(19) Europäisches Patentamt
European Patent Office
Office européen des brevets

(11) **EP 4 189 330 B1**

(12) **EUROPÄISCHE PATENTSCHRIFT**

(45) Veröffentlichungstag und Bekanntmachung des Hinweises auf die Patenterteilung:
**15.04.2026   Patentblatt 2026/16**

(21) Anmeldenummer: **21749150.5**

(22) Anmeldetag: **23.07.2021**

(51) Internationale Patentklassifikation (IPC):
***G01D 5/20*** *(2006.01)*

(52) Gemeinsame Patentklassifikation (CPC):
**G01D 5/2006**

(86) Internationale Anmeldenummer:
**PCT/EP2021/070649**

(87) Internationale Veröffentlichungsnummer:
**WO 2022/023191 (03.02.2022 Gazette 2022/05)**

(54) **POSITIONSSENSOR ZUM BESTIMMEN DER POSITION EINER VENTILSTANGE EINES STELLVENTILS**

POSITION SENSOR FOR DETERMINING THE POSITION OF A VALVE ROD OF A CONTROL VALVE

CAPTEUR DE POSITION PERMETTANT LA DÉTERMINATION DE LA POSITION D'UNE TIGE DE SOUPAPE D'UNE SOUPAPE DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2020   DE 102020119985**

(43) Veröffentlichungstag der Anmeldung:
**07.06.2023   Patentblatt 2023/23**

(73) Patentinhaber: **Samson Aktiengesellschaft 60314 Frankfurt am Main (DE)**

(72) Erfinder: **STEFAN, Kolbenschlag 64291 Darmstadt (DE)**

(74) Vertreter: **noventive Patentanwaltsgesellschaft mbH
Riesstraße 16
80992 München (DE)**

(56) Entgegenhaltungen:
**EP-A1- 1 158 266          EP-A1- 1 884 749
WO-A1-97/39312          DE-A1- 10 130 572
DE-A1- 102004 013 477**

**Beschreibung**

Gebiet der Erfindung

Die Erfindung betrifft einen Positionssensor zum Bestimmen der Position einer Ventilstange eines Stellventils.

Stellventile benötigen in der Regel derartige Positionssensoren, um die Stellung des Ventilgliedes zu erfassen, damit der Stellungsregler eine genaue Position einregeln kann. Hierfür werden absolute Messverfahren bevorzugt, da eine Referenzmessung in einer prozesstechnischen Anlage nicht möglich ist und nach einem Störfall oder beim Hochfahren der Anlage die Ventilstellung für den gewünschten Öffnungsquerschnitt sofort eingestellt werden muss. Aufgrund der schwierigen Umwelteinflüsse in prozesstechnischen Anlagen werden hierfür berührungslose Messverfahren bevorzugt.

Stand der Technik

Bei Positionssensoren für Stellventile kommen häufig magnetische oder optische Hubmessverfahren zum Einsatz, wobei ein bestimmtes Muster durch einen Sensor abgetastet wird. Dieses Muster erstreckt sich entweder über den gesamten Hubbereich, oder es sind mehrere Sensoren angebracht, welche ein einheitliches Muster überfahren. Die Veröffentlichungen EP 2 834 601 B1 oder EP 861 417 B1 zeigen solche Sensoren.

Weiterhin sind Sensoranordnungen bekannt, bei denen als Sensorelemente Spulenanordnungen verwendet werden, welche von metallischen Elementen überfahren werden und entweder mittels Induktion eine Flussänderung detektieren oder Frequenzänderungen messen. Ein Beispiel dafür ist in der Veröffentlichung DE 100 48 435 A1 beschrieben.

In der Veröffentlichung EP 1 083 408 B1 ist offenbart, für Drehwinkelmessungen in eine Leiterplatte eingebettete Spulen hintereinander zu schalten. Die Veröffentlichung EP 3 365 634 B1 zeigt darüber hinaus, solche Spulen zyklisch der Reihe nach mit Wechselspannung zu versorgen, so dass jeweils ein erster Teil der Spulen mit Wechselspannung versorgt wird und ein verbleibender Teil unbestromt ist.

Die Veröffentlichung EP 1 158 266 A1 beschreibt ein Wegmesssystem mit einem Geber, einem Sensor, welcher ein induktives Element umfasst, an das der Geber elektromagnetisch koppelt, und mit einer Auswerteeinheit für ein Sensorsignal, wobei Sensor und Geber relativ zueinander positionierbar sind. Dieses Wegmesssystem ist grundsätzlich zur Positionsmessung an pneumatischen Zylindern, zur Messung von Ventilstellungen oder bei Greifern geeignet.

Spezielle Ausgestaltungen für die Anforderungen bei Stellventilen sind jedoch, ebenso wie Möglichkeiten zur Anpassung an unterschiedliche, insbesondere große Hublängen, nicht bekannt. Auch sind die bekannten Spulenanordnungen nicht für Niedrigenergieanwendungen geeignet.

Aufgabe

Aufgabe der Erfindung ist es, einen Positionssensor für Stellventile anzugeben, der kostengünstig und für unterschiedliche, insbesondere große Hublängen sowie für Niedrigenergieanwendungen geeignet ist.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird eine Ventilstange mit Positionssensor zum Bestimmen der Position der Ventilstange eines Stellventils vorgeschlagen. Dieser hat einen Zeiger, der derart mit der Ventilstange gekoppelt ist, dass er bei einer Bewegung der Ventilstange von dieser mitgeführt wird. Der Zeiger ist aus einem magnetisch und / oder elektrisch leitenden Material gebildet und / oder trägt mindestens ein passives elektronisches Bauelement. Passive elektronische Bauelemente können z.B. Spulen, Kondensatoren oder Widerstände sein. Der Positionssensor hat eine Mehrzahl von Modulen, wobei jedes Modul aus einer Leiterplatte gebildet ist, auf der mindestens eine Flachspule aufgedruckt ist. Jedes Modul ist derart angeordnet, dass der Zeiger bei einer Bewegung der Ventilstange die mindestens eine Flachspule berührungslos überstreicht. Dabei sind die Form und die Abmessungen aller Module identisch. Jedes dieser Module weist identische Flachspulen auf. Die Module sind derart ausgebildet, dass sie äquidistant und linear miteinander verbindbar sind. Dadurch wird eine besondere Eignung des Positionssensors für unterschiedliche, auch große Hublängen erreicht.

Um die Module ohne Ausrichtungsfehler miteinander verbinden zu können, haben die Leiterplatten der Module die Form zweier identischer Rechtecke, die in Längsrichtung des jeweiligen Moduls parallel angeordnet sind und sich berühren, jedoch in Längsrichtung des Moduls gegeneinander verschoben sind. Auf diese Weise ist ein Versatz der Rechtecke gegeneinander vorhanden, was einen geknickten Abschluss in Längsrichtung der Ventilstange ergibt. Zudem sind die Flachspulen derart auf den Leiterplatten aufgedruckt, dass sich bei jeweils zwei verbundenen Modulen ein Überlapp der Flachspulen auf den beiden Modulen in Längsrichtung der Ventilstange ergibt. Dies ist bei der Messung des Signals von Vorteil, da bei der Bewegung des Zeigers von einem Modul zum nächsten keine Unterbrechung auftritt, sondern stets ein Signal gemessen werden kann.

Eine präzisere Beabstandung der Module zueinander wird dadurch erreicht, dass die Leiterplatten der Module Positioniervorsehungen, z.B. in Form von Löchern oder Bohrungen aufweisen.

Eine Mehrzahl von Modulen ist in einem Gehäuse angeordnet. Das Gehäuse weist einen Schlitz auf, durch den der Zeiger in das Gehäuse hineinragen kann, um die mindestens eine Flachspule zu überstreichen. Dadurch wird ein wirksamer Schutz vor Umwelteinflüssen z.B. in einer prozesstechnischen Anlage erreicht.

Das Gehäuse weist Zentrierungen auf, welche komplementär in die Positioniervorsehungen der Leiterplatten der Module eingreifen. Dadurch werden die Module präzise äquidistant zueinander ausgerichtet. Zugleich entfällt der Aufwand für die Fertigung mehrerer Gehäuse. Die Zentrierungen können beispielsweise die Form von Stiften haben, die in entsprechende Löcher eingreifen.

Der Positionssensor hat außerdem einen Messwandler bzw. eine elektronische Auswerteschaltung, der an der mindestens einen Flachspule ein Signal misst, welches Rückschlüsse über die Relativposition des Zeigers und der mindestens einen Flachspule erlaubt.

Ändert sich der Hub des Stellventils durch eine Bewegung der Ventilstange, so beeinflusst der Zeiger messbare physikalische Größen der mindestens einen Flachspule, wodurch der Messwandler ein entsprechendes Signal messen kann.

Ein solcher Positionssensor für Stellventile ist, insbesondere durch die Gestaltung der Module als Leiterplatten mit aufgedruckten Flachspulen, sehr kostengünstig herzustellen. Durch den geringen Abstand, in dem der Zeiger das mindestens eine Modul überstreicht, kann zudem der Energiebedarf niedrig gehalten und ein starkes Signal erreicht werden. Auch kann eine zu der Hublänge passende Anzahl von Modulen verwendet werden, die den Messbereich des Positionssensors über die Länge eines Moduls hinaus erweitern. Die mit dem Positionssensor erfassbaren Hublängen sind also nicht auf die Länge einer Leiterplatte beschränkt, und es ist auch nicht erforderlich, für jeden Ventiltyp unterschiedliche Leiterplatten in passender Länge vorzusehen. Durch die Vereinheitlichung lassen sich ferner die Herstellungskosten senken.

Eine höhere Genauigkeit der Positionsbestimmung wird erreicht, wenn die Ventilstange mit Positionssensor eine Mehrzahl von Flachspulen aufweist, welche derart paarweise angeordnet sind, dass die Flachspulen eines Paares jeweils gegenläufige Signale liefern. Dies lässt sich durch eine geeignete Wahl der Form und Orientierung der Flachspulen sicherstellen. Diese können beispielsweise dreieckig oder trapezförmig sein.

Werden die gegenläufigen Signale jeweils zusammen ausgewertet, erhöht sich die Genauigkeit, weil Störeffekte, wie beispielsweise Temperatureinflüsse, auf beide Flachspulen eines Paars gleichermaßen wirken. Die Signale lassen sich differentiell leicht auswerten. Dabei wird die Differenz der Messwerte der beiden Flachspulen eines Paares durch ihre Summe dividiert. Bei einem solchen Positionssensor bildet ein solches Paar von Flachspulen die kleinste sinnvolle Einheit, die einzeln anzusprechen ist.

Dabei haben die Flachspulen jeweils eine dreieckige Form. Die zwei Flachspulen eines Paares sind zudem punktsymmetrisch zueinander angeordnet. D.h. eine erste der beiden Flachspulen eines Paares kann beispielsweise so auf der Leiterplatte angeordnet sein, dass die Basis der dreieckigen Form nach unten und die der Basis gegenüberliegende Spitze nach oben zeigt, während die Anordnung der zweiten der Flachspulen des Paares umgekehrt ist. Beide Flachspulen liefern dann Signale, die nicht nur gegenläufig sind, sondern auch ansonsten gleiches Verhalten zeigen. Durch die dreieckige Form der Flachspulen kann besonders gut erreicht werden, dass die Signale linear von der Relativposition von Flachspule und Zeiger abhängen. Die typische Betriebsfrequenz solcher Spulen liegt im Bereich von einigen hundert kHz bis zu wenigen MHz.

Eine besonders gleichmäßige Positionsbestimmung wird ermöglicht, wenn alle Flachspulen oder bei paarweiser Anordnung alle Paare von Flachspulen derart angeordnet sind, dass sie sich in Längsrichtung der Ventilstange jeweils gleich weit überlappen. Dann gibt es zu jeder möglichen Position eine Flachspule oder ein Spulenpaar, das gerade vom Zeiger überstrichen wird und demnach ein gut messbares Signal liefert. Insbesondere gibt es beim Übergang von einer Flachspule bzw. einem Spulenpaar zur bzw. zum jeweils nächsten keine Unterbrechungen.

Vorzugsweise erfolgt die elektrische Verbindung der Module durch Federkontakte. Diese können standardisiert sein und zur Festlegung des Abstandes der Module zueinander beitragen.

Der Zeiger besteht bevorzugt aus Aluminium, Blech, Ferrit oder Messing.

Je nach dem, aus welchem Material der Zeiger besteht, können von dem Messwandler auf unterschiedliche Weise Signale gemessen werden, um Rückschlüsse über die Relativposition des Zeigers und der mindestens einen Flachspule zu ermöglichen. Ist das Material beispielsweise magnetisch leitfähig, z.B. Ferrit, so ändert der Zeiger beim Überstreichen des mindestens einen Moduls den magnetischen Widerstand der Flachspule. Ist das Material dagegen nur elektrisch, aber nicht magnetisch leitfähig, z.B. Aluminium oder Messing, so entstehen, wenn die Flachspulen mit Wechselspannung versorgt werden, beim Überstreichen derselben Wirbelströme, welche dämpfend wirken.

Die genannten Materialien sind u.a. wegen ihrer Formbarkeit und leichten Verfügbarkeit vorteilhaft.

Alternativ kann der Zeiger auch als Leiterplatte mit mindestens einem passiven elektronischen Bauelement ausgebildet sein.

Das Überstreichen des mindestens einen Moduls kann besonders gleichmäßig und in festem Abstand erfolgen, wenn mindestens eine Schiene und/oder ein Schlitten vorhanden sind, so dass der Zeiger mittels der Schiene und/oder des Schlittens parallel zur Ventilstange entlang der Module geführt wird.

Ein solcher Schlitten kann vorzugsweise aus einem Kunststoff, besonders bevorzugt einem Lagerwerkstoff, bestehen. Zudem kann es bei einer solchen Ausgestaltung von Vorteil sein, wenn der Zeiger auf den Schlitten aufgeklipst wird. Dies erleichtert unter anderem die Montage des Positionssensors. Wichtig ist, dass die Schienen, ggf. der Schlitten und der Zeiger weitestgehend spielfrei miteinander verbunden sind und dass die Schienen parallel zu der Mittelachse der Bewegung der Ventilstange ausgerichtet sind. Nur auf diese Weise ist ein gleichmäßiger Abstand des Zeigers zu dem bzw. den Modulen über den gesamten Hubbereich der Ventilstange sicher gewährleistet. Ebenso müssen die Leiterplatten der Module in gleicher Weise fixiert sein.

Besonders kompakt lässt sich die oben beschriebene Führung mittels mindestens einer Schiene verwirklichen, wenn die mindestens eine Schiene sich an den Modulen befindet.

Bei einer Ventilstange mit Positionssensor, wie sie soeben beschrieben wurde, ist es besonders vorteilhaft, wenn die Kopplung des Zeigers an die Ventilstange durch einen Mitnehmerring an der Ventilstange erfolgt. Ein am Zeiger befestigter Stift läuft derart in einem Langloch oder einer Rille im Mitnehmerring, dass der Zeiger vertikalen Bewegungen der Ventilstange folgt, aber von Drehbewegungen oder leichten Verschränkungen der Ventilstange entkoppelt ist. Mitunter hat die Ventilstange radiales Spiel in den Gleitlagern des Ventildeckels bzw. des Ventilgehäuses des Stellventils. Die Ventilstange ist auch Biegungen aufgrund von Kräften durch das Prozessmedium ausgesetzt. Von der genannten Koppeleinrichtung zwischen dem Zeiger und der Ventilstange, welche lediglich vertikale Bewegungen der Ventilstangenbewegung überträgt, werden mögliche Biegungen, Führungsspiel und Verdrehungen der Ventilstange nicht auf die Führung des Positionssensors übertragen. Der Positionssensor funktioniert dann auch zuverlässig, falls die Ventilstange nicht gegen Verdrehung gesichert ist. Der Mitnehmerring kann zur Fixierung des Stiftes beispielsweise mit einem Federelement versehen sein.

Falls der Zeiger eine Abschirm-Hülle aufweist, welche aus einem elektrisch und / oder magnetisch leitenden Material besteht und / oder geerdet ist, wobei die Abschirm-Hülle den Zeiger und das mindestens eine Modul in einer Umgebung des Zeigers umschließt, kann das mindestens eine Modul selbst besonders kostengünstig gestaltet werden, da auf eine spezielle Abschirmung desselben verzichtet werden kann.

Als Modul kann dann beispielsweise eine einfache vergossene Leiterplatte dienen, welche gegen Umwelteinflüsse (z.B. Klima, Feuchte) geschützt ist. Eine solche Abschirm-Hülle ist mit dem Zeiger verbunden und wird von diesem mitgenommen. Sie schirmt also nur den Bereich des mindestens einen Moduls ab, an dem das Signal für die Positionsbestimmung gemessen werden muss. Die Hülle ist dabei so gestaltet, dass sie das Modul in ausreichendem Abstand umschließt, dass die Messung des Signals nicht verfälscht wird. Durch die Verbindung mit dem Zeiger, der seinerseits mit der Ventilstange verbunden ist, kann die Erdung der Abschirm-Hülle sichergestellt sein. Als Material für die Abschirm-Hülle ist Ferrit besonders vorteilhaft.

Am einfachsten lässt sich der Positionssensor verschalten, wenn der Messwandler durch eine Mehrzahl von parallelen Leitungen derart mit jeder Flachspule oder bei paarweiser Anordnung jedem Paar von Flachspulen verbunden ist, dass er das Signal jeweils unabhängig von den übrigen Flachspulen messen kann. Die Ansteuerung der Leitungen zu den Flachspulen bzw. Paaren von Flachspulen kann beispielsweise durch einen Multiplexer verwirklicht sein.

Kompakter und mit weniger Leitungen, dafür aber elektronisch aufwändiger lässt sich der Positionssensor verschalten, wenn der Messwandler durch einen Datenbus mit jeder Flachspule oder bei paarweiser Anordnung jedem Paar von Flachspulen verbunden ist. Dazu ist an jeder Flachspule oder bei paarweiser Anordnung jedem Paar von Flachspulen auf der jeweiligen Leiterplatte ein Chip mit einer eigenen digitalen Identfikation vorhanden, so dass der Messwandler das Signal jeweils unabhängig von den übrigen Flachspulen messen kann. Im Idealfall können so alle Flachspulen bzw. Paare von Flachspulen über eine einzige Datenbus-Leitung, die sämtliche der vorgenannten Chips verbindet, angesteuert werden.

Vorzugsweise ist das Messverfahren ausgewählt aus: Differentialdrossel, Differentialtransformator, Induktivitätsmessung der Spulen, Dämpfung durch Wirbelströme.

Bei der Messanordnung als Differentialdrossel (vgl. Glossar) werden die Flachspulen einzeln oder paarweise als Brückenwiderstände geschaltet.

Soll als Messanordnung der Differentialtransformator verwendet werden, kann der Zeiger zusätzlich mit einer Spule ausgestattet werden, die als Primärspule für die Transformatorschaltung dient. Alternativ kann, korrespondierend mit jedem Spulenpaar auf der Leiterplatte, eine jeweils weitere, dritte Flachspule als Primärspule dienen.

Der Zeiger ändert - sofern er magnetisch leitfähig ist - beim Überstreichen der Flachspulen den magnetischen Widerstand derselben. Diese Änderungen lassen sich mittels Induktivitätsmessungen feststellen. Dieses Messprinzip ist wegen seiner Einfachheit besonders bevorzugt. Zudem ist der Energieverbrauch besonders niedrig, da an jede einzelne Spule nur für die Dauer einer solchen Induktivitätsmessung überhaupt eine Spannung angelegt werden muss.

Überstreicht ein elektrisch leitender Zeiger die Flachspulen, so entstehen Wirbelströme im Zeiger, die dämpfend wirken, wenn die Spulen mit Wechselspannung versorgt werden. Diese Dämpfung lässt sich ebenfalls als Messprinzip nutzen.

Der Messwandler des Positionssensors beinhaltet bevorzugt auch einen Mikrocontroller. Dies ermöglicht eine besonders effektive Ansteuerung der Flachspulen und Auswertung der Signale. Zudem kann die gleiche Steuerung für Positionssensoren mit unterschiedlich vielen Modulen verwendet werden.

Ein besonders niedriger Energieverbrauch des Positionssensors lässt sich dadurch erreichen, dass der Messwandler derart konfiguriert ist, dass nach einer Initialisierungsphase nur die Flachspule oder das Spulenpaar mit dem stärksten Signal und die unmittelbaren Nachbarn davon angesteuert werden.

In der Initialisierungsphase können z.B. die Signale von jeder Flachspule bzw. jedem Spulenpaar miteinander verglichen werden, um zu ermitteln, wo der Zeiger sich gerade befindet. Alternativ kann diese Position von der vorangegangenen Messung in dem Messwandler gespeichert sein.

Die Aufgabe wird zudem gelöst von einem Stellventil mit einer Ventilstange mit einem Positionssensor, wie er weiter oben beschrieben wurde.

Die Aufgabe wird außerdem durch eine prozesstechnische Anlage mit einem Stellventil, wie es soeben beschrieben wurde, gelöst.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1     eine schematische Darstellung eines Positionssensors mit einem einfachen Modul mit einem Paar dreieckiger Flachspulen;

Fig. 2     eine schematische Darstellung eines Stellventils mit einem erfindungsgemäßen Positionssensor mit einem Modul mit drei Paaren von Flachspulen;

Fig. 3     eine schematische Darstellung eines Positionssensors an einem Stellventil, bei dem der Zeiger von Verdrehungen der Ventilstange entkoppelt ist;

Fig. 4     eine schematische Darstellung eines Positionssensors an einem Stellventil, bei dem der Zeiger eine Abschirm-Hülle aufweist;

Fig. 5     eine weitere schematische Darstellung des Positionssensors aus Fig. 4;

Fig. 6     eine schematische Darstellung einer Mehrzahl verbundener Module mit Positioniervorsehungen in einem Gehäuse mit Zentrierungen; und

Fig. 7     eine schematische Darstellung einer Mehrzahl verbundener Module mit Positioniervorsehungen ohne zugehöriges Gehäuse.

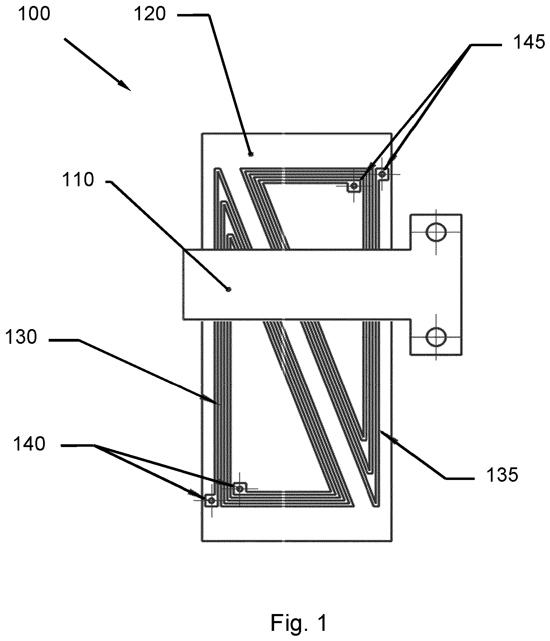

Fig. 1 zeigt ein Modul 100 sowie den Zeiger 110 eines erfindungsgemäßen Positionssensors. Das Modul besteht aus einer Leiterplatte 120, auf der zwei dreieckige Flachspulen 130, 135 aufgedruckt sind. Auch die Anschlüsse 140, 145 der Flachspulen sind dargestellt. Bei dem Zeiger 110 handelt es sich typischerweise um ein "passives" Stück Metall oder Blech, welches sich in geringem Abstand (typischerweise wenige mm) berührungslos über dem Modul 100 bewegen kann. Der Zeiger 110 verändert durch den Grad der Überlappung die Induktivität der Flachspulen 130, 135, da sich der Metallanteil in der jeweiligen Luftspule verändert.

Der Zeiger kann magnetisch und/oder elektrisch leitend ausgebildet sein, je nach dem, welcher Effekt gemessen und ausgewertet werden soll. Bevorzugt ist der Zeiger magnetisch leitend, und es wird die Induktivität der Flachspulen 130, 135 betrachtet. Die Flachspulen 130, 135 sind als Spulenpaar konfiguriert. Das bedeutet insbesondere, dass sie punktsymmetrisch angeordnet sind: Das breite Ende der ersten Flachspule 130 befindet sich neben dem spitzen Ende der zweiten Flachspule 135, und umgekehrt. Diese Anordnung bewirkt, dass die Signale, die mit den Flachspulen 130, 135 erzeugt bzw. gemessen werden, jeweils ein entgegengesetztes Verhalten zeigen: während z.B. das Signal der Spule 130 aufgrund einer Verschiebung des Zeigers 110 kleiner wird, wird das Signal der anderen Spule 135 entsprechend größer. Die Messungen an den beiden Spulen ergänzen sich daher und können so genauere Ergebnisse liefern. Durch die Differentialanordnung der beiden Flachspulen 130, 135 werden Effekte wie Temperaturabhängigkeiten, Störeinkopplungen usw. eliminiert, da diese auf beide Flachspulen gleichermaßen einwirken. In Fig. 1 steigt bei der Bewegung des Zeigers 110 nach unten z.B. die Induktivität der ersten Flachspule 130, während die Induktivität der zweiten Flachspule 135 fällt.

Die Auswerteschaltung (nicht dargestellt) erzeugt hierzu die Signale $S_{F1}$ (ansteigend) und $S_{F2}$ (fallend), wenn sich der Zeiger 110 nach unten bewegt. Nach der folgenden Rechenvorschrift erhält man ein stabiles, störungsresistentes Signal, das von der Zeigerposition h abhängt:

$$S_{diff}(h) = (S_{F2}(h) - S_{F1}(h)) / (S_{F2}(h) + S_{F1}(h))$$

Der Energiebedarf eines solchen Positionssensors ist so gering, dass eine Stromversorgung mit 4-20 mA, wie sie in der Prozessindustrie zur Ventilansteuerung üblich ist, vollkommen ausreicht. Sensoren mit induktiven Messprinzipien und planaren Spulen sind generell sehr kostengünstig, da die Basis des Sensors durch Aufdrucken von Leiterbahnen auf Leiterplattenmaterial herstellbar ist. Als Messverfahren kommen z.B. Differentialdrossel, Differentialtransformator, Induktivitätsmessung der Spulen, Änderung der transformatorischen Überkopplung einer Sendespule in zwei Empfangsspulen oder Bedämpfung der Spulen durch Wirbelströme in Frage.

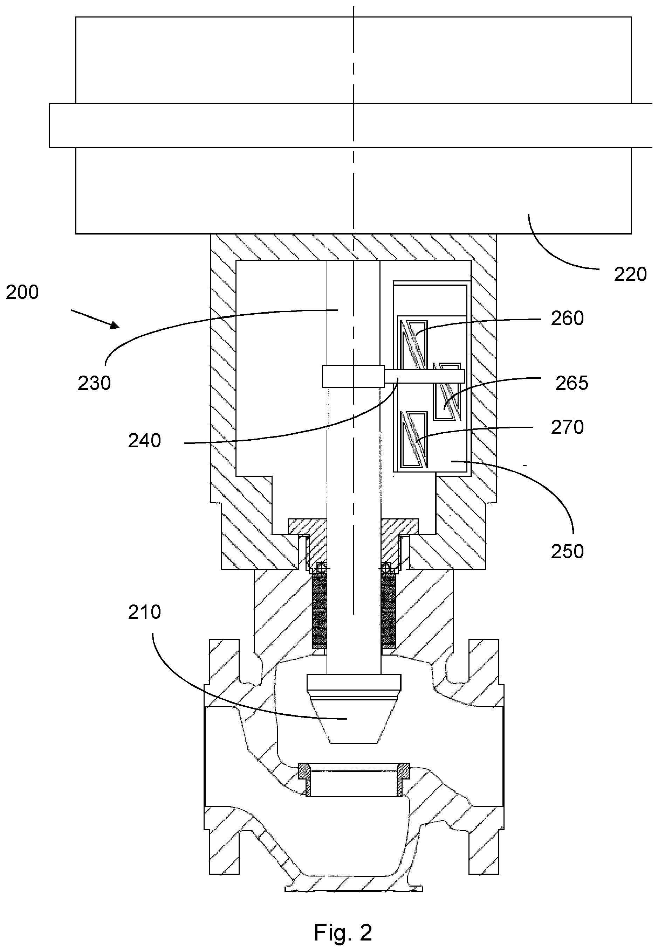

In Fig. 2 ist ein Querschnitt durch ein Stellventil 200 zu sehen, das mit einem erfindungsgemäßen Positionssensor ausgestattet ist. Der Ventilkegel 210 wird vom pneumatischen Antrieb 220 über die Ventilstange 230 angetrieben. Um die Position des Ventilkegels bzw. der Ventilstange zu bestimmen, ist an der Ventilstange 230 der Zeiger 240 des Positionssensors fest angebracht. Dieser überstreicht das neben der Ventilstange montierte Modul 250 des Positionssensors so weit, wie der Hub des Ventilkegels geht. Für den Hubbereich, über den hierbei Positionen gemessen werden sollen, sind in diesem Beispiel drei Paare 260, 265, 270 von Flachspulen, wie sie weiter oben beschrieben wurden, auf dem Modul 250 untergebracht. Um eine gleichmäßige und unterbrechungsfreie Messung zu ermöglichen, sind die Spulenpaare 260, 265, 270 derart versetzt angeordnet, dass die aufeinander folgenden Spulenpaare sich jeweils in Längsrichtung der Ventilstange 230 gleich weit überlappen. Der Zeiger 240 muss bei einer solchen Ausführung etwas länger ausgeführt werden, als bei einer Variante mit nur einem Spulenpaar. Typische Hubmessbereiche sind 15-40 mm.

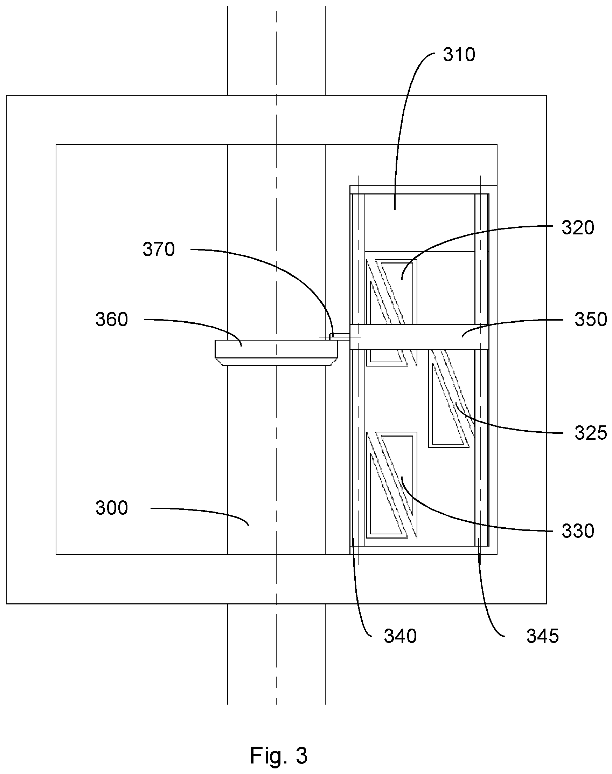

In Fig. 3 ist ein erfindungsgemäßer Positionssensor dargestellt, der von Drehbewegungen der Ventilstange 300 entkoppelt ist. Zu diesem Zweck sind parallel zu dem Modul 310 - wieder in einer Ausführung mit drei Paaren 320, 325, 330 von Flachspulen - zwei Führungsschienen 340, 345 vorhanden, an denen der Zeiger 350 geführt wird. Der Zeiger 350 bleibt somit immer in konstantem Abstand parallel zu dem Modul 310. Die Kopplung des Zeigers 350 an die Ventilstange 300 erfolgt hierbei über einen Mitnehmerring 360 an der Ventilstange und einen fest mit dem Zeiger 350 verbundenen Mitnehmerstift 370, der in Längsrichtung der Ventilstange von dem Mitnehmerring 360 mitbewegt wird, in tangentialer Richtung aber genügend Spiel hat. Der Mitnehmerring 360 ist starr mit der Ventilstange 300 verbunden. Der Mitnehmerstift 370 ist glatt ausgeführt und liegt entweder auf der oberen Fläche des Mitnehmerrings 360 auf, wobei er mit einem Federelement (nicht dargestellt) auf den Mitnehmerring gedrückt wird, oder der Mitnehmerstift wird formschlüssig in einem Langloch (nicht dargestellt) des Mitnehmerrings geführt.

Die Führung des Zeigers 350 an den Schienen 340, 345 erfolgt weitestgehend reibungsfrei. Um dies zu gewährleisten, kann der Zeiger mit einem separaten Schlitten (nicht dargestellt) ausgestattet sein, der auf den Schienen 340, 345 läuft. Die Schienen können dabei als Gleitstangen ausgeführt sein. Der Schlitten hat den Vorteil, dass er, insbesondere im Bereich der Gleitbuchsen, aus einem nichtmetallischen Werkstoff bestehen kann, der z.B. für besonders geringe Reibung optimiert ist. Für diesen Zweck sind besonders Lagerwerkstoffe hervorragend geeignet. Der Zeiger 350, der vorzugsweise magnetisch und/oder elektrisch leitend ist, also typischerweise aus Ferrit oder aus Blech oder anderen metallischen Werkstoffen besteht, kann auf den zumindest teilweise nichtmetallischen Schlitten vorzugsweise aufgeklipst oder aufgesteckt sein. Es sind aber auch viele andere geeignete Verbindungsarten bekannt.

Alternativ (nicht dargestellt) kann der Zeiger als Leiterplatte ausgeführt sein, auf der mindestens ein passives elektronisches Bauelement, z.B. eine Spule oder ein Kondensator, angeordnet ist. Wegen der geringeren Stabilität eines solchen Zeigers ist eine Ausführung mit Führungsschienen dafür besonders vorteilhaft.

Eine Ausführungsform des Positionssensors wie in Fig. 3 ist deshalb sinnvoll, weil Ventilstangen bei pneumatisch angetriebenen Stellventilen in vielen Fällen nicht gegen Verdrehungen gesichert sind. Die typischerweise auftretenden Verdrehungen um wenige Grad reichen aus, um bei den für den Positionssensor in Frage kommenden Messprinzipien die Positionsbestimmung deutlich zu beeinflussen, wenn der Zeiger starr mit der Ventilstange verbunden ist. Dies kann bei der Signalauswertung kompensiert werden, wenn z.B. mit Hilfe zusätzlicher Spulen der Abstand zwischen Zeiger und Modul erfasst wird. Die in Fig. 3 dargestellte Ausführung ist jedoch weniger kompliziert und weniger fehleranfällig.

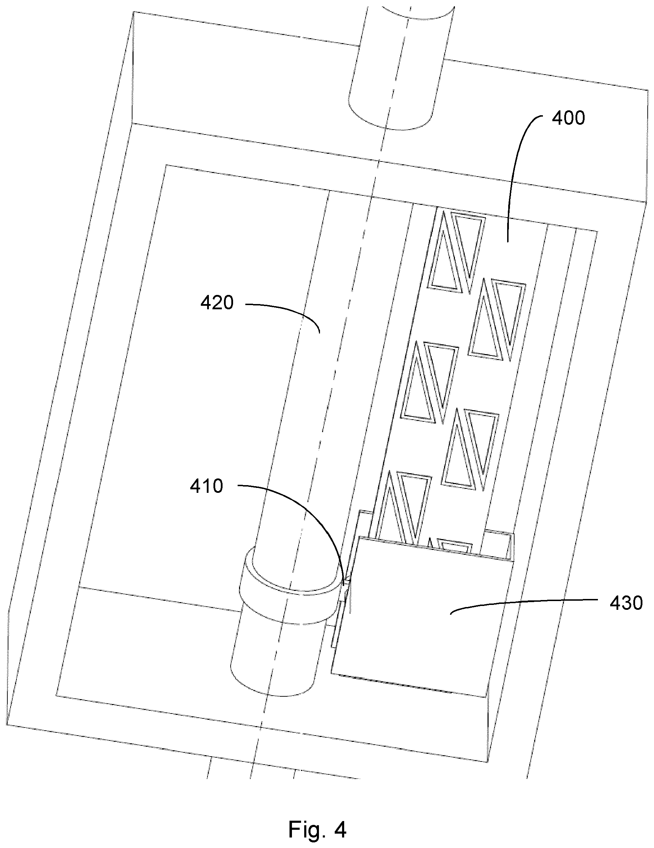

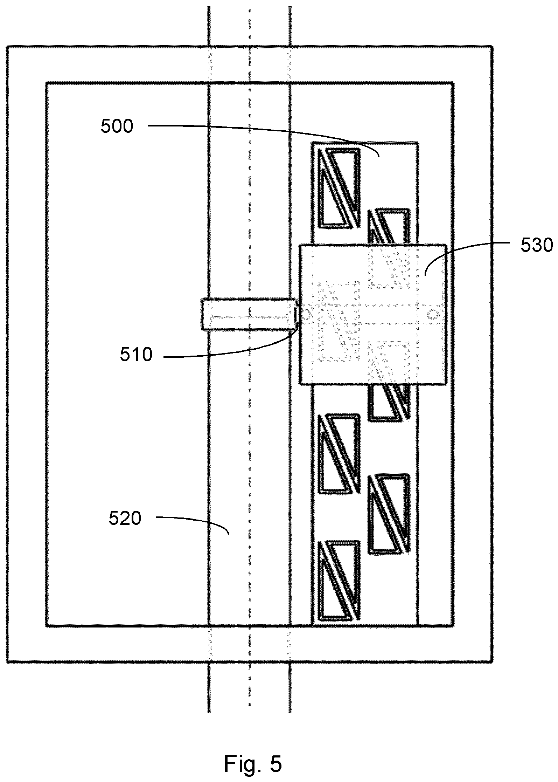

Bei Anwendungen in der Prozessindustrie ist es von Vorteil, wenn die Flachspulen des Positionssensors gegen Umgebungseinflüsse, insbesondere Störfelder, abgeschirmt sind. Je größer die zu messenden Hübe sind, desto aufwändiger gestaltet sich dies jedoch. Bei besonders großen Hüben kann es daher vorteilhaft sein, die Abschirmung mit dem Zeiger zu verbinden, wie es in den Fig. 4 und Fig. 5 zu sehen ist.

Aufgrund des größeren Hubs ist das dort dargestellte Modul 400, 500 mit 7 Paaren von Flachspulen ausgestattet, welche in der bereits beschriebenen Weise versetzt überlappend angeordnet sind. Das Modul kann (z.B. durch Umgießen der Leiterplatte) auf einfache Weise gegen Umwelteinflüsse wie z.B. Staub oder Feuchtigkeit geschützt sein.

Der Zeiger 410, 510 der mit der Ventilstange 420, 520 verbunden ist, weist hierbei eine Abschirm-Hülle 430, 530 auf. Diese ist mit dem Zeiger fest verbunden und nimmt somit an der Hubbewegung von Zeiger und Ventilstange teil. Die Abschirm-Hülle 430, 530 umgibt dabei den Bereich des Moduls 400, 500, an dem sich der Zeiger gerade befindet und an dem also gerade gemessen wird. Sie ist so bemessen, dass eine hinreichende Abschirmung elektromagnetischer Störfelder stattfinden kann. Die Abschirm-Hülle ist dabei so gestaltet, dass sie zu den Flachspulen immer einen ausreichend großen Abstand hat, so dass sie das zu messende Signal ihrerseits nicht verfälschen kann.

In der Ausführung von Fig. 4 und 5 hat die Abschirm-Hülle in Längsrichtung der Ventilstange 420, 520 einen U-förmigen Querschnitt. In Fig. 4 (Schrägdarstellung) ist zu erkennen, in welcher Weise die Abschirm-Hülle 430 das Modul 400 umgibt.

Fig. 5 zeigt eine seitliche Draufsicht. Hier ist insbesondere zu erkennen, dass die Abschirm-Hülle 530 in Längsrichtung der Ventilstange 520 genügend ausgedehnt ist, dass der für eine Messung gerade relevante Bereich überdeckt und damit abgeschirmt ist. Die Abschirm-Hülle 430, 530 kann in leitender Weise mit dem Zeiger 410, 510 und damit typischerweise auch mit der Ventilstange 420, 520 verbunden sein, was in aller Regel für eine Erdung (GND) sorgt. Um die Abschirmeigenschaften weiter zu optimieren, ist auch eine Kabelverbindung mit der Auswerteelektronik möglich.

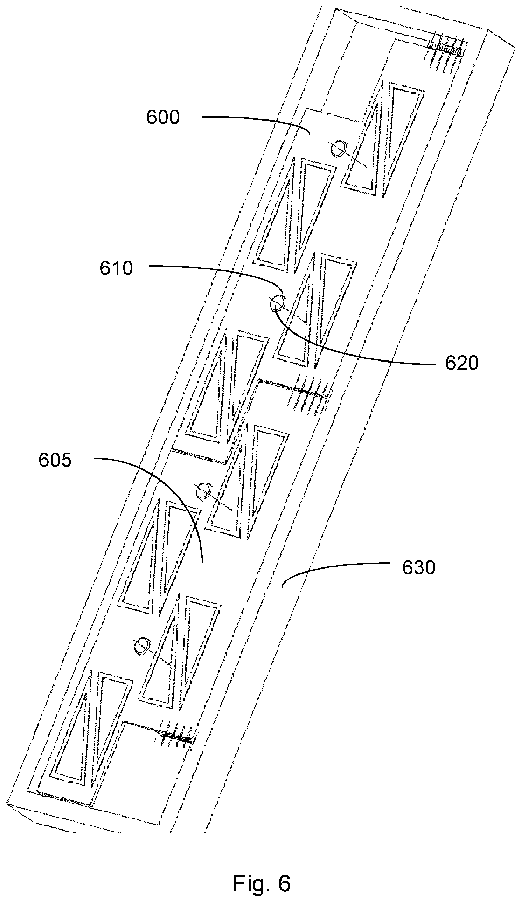

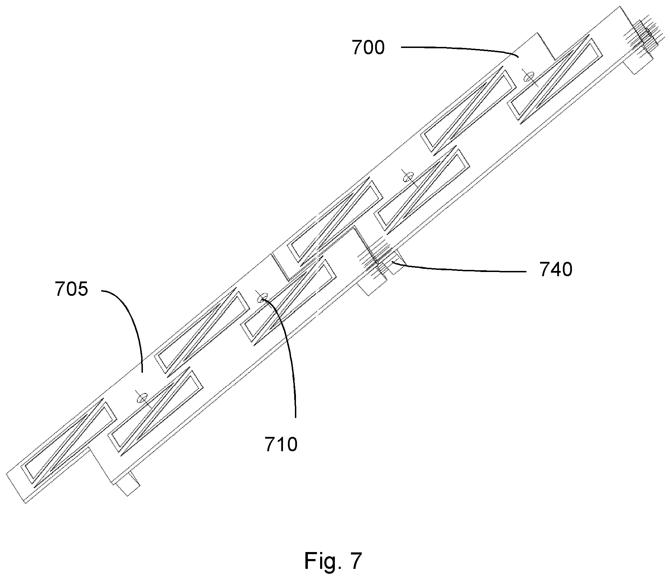

Sind noch größere Hubbereiche zu messen, oder sollen sehr unterschiedliche Hubbereiche durch ansonsten gleichartige Positionssensoren erfassbar sein, ist es zweckmäßig, Ausführungen des erfindungsgemäßen Positionssensors mit mehreren Modulen vorzusehen. Die Länge der herzustellenden Leiterplatten kann dann klein und einheitlich gehalten werden. Insbesondere können sehr lange Leiterplatten vermieden werden, da deren Herstellung kostenintensiv ist. Eine derartige Ausführung ist in den Fig. 6 und Fig. 7 zu sehen.

In Fig. 6 sind zwei Module 600, 605 dargestellt, die jeweils über vier Paare von Flachspulen verfügen, die in der bereits beschriebenen Weise versetzt überlappend angeordnet sind. Damit sich diese Anordnung an der Verbindung der Module nahtlos fortsetzt, weisen die Leiterplatten, aus denen die Module bestehen, an ihren Enden jeweils eine entsprechend groß ausgebildete Versatz-Stufe aus. Um sicherzustellen, dass die Abstände der Spulen auch von einem Modul zum anderen präzise genug sind, weisen die Module Positioniervorsehungen, hier in Form von Positionierlöchern 610 auf, die Zentrierungen aufnehmen. Die Zentrierungen sind in diesem Fall in Form von Indexstiften 620 verwirklicht, welche Teil des gemeinsamen Gehäuses 630 sind, in dem die Module untergebracht sind. Die Länge des Gehäuses wird so gestaltet, dass die gewünschte Anzahl von Modulen hineinpasst. Energieversorgung und Signale können beispielsweise durch eine Kabelverschraubung zu- und abgeführt werden (nicht dargestellt).

Fig. 7 zeigt ebenfalls zwei Module 700, 705 mit jeweils vier Paaren von Flachspulen. Hier ist zu sehen, dass die Verbindung der Module über elektrische Kontaktelemente 740 erfolgt, die z.B. auf der Unterseite der Leiterplatten an ihren Längsenden angebracht sein können. Diese Kontaktelemente sind vorzugsweise als Federkontakte gestaltet, welche ein einfaches Verbinden und Trennen ermöglichen und zugleich gute Kontakteigenschaften aufweisen. Auch in Fig. 7 sind die Positionierlöcher 710 gut zu erkennen, die dazu dienen, Zentrierungen bzw. Indexstifte aufzunehmen und so genaue Abstände zwischen den Flachspulen auch über die Modul-übergänge hinaus zu gewährleisten.

Die für die Auswerteschaltung benötigten Elektronikbauteile wie Mikrokontroller, Verstärker, passive Bauelemente usw. müssen nur auf einem der Module vorhanden sein. Alternativ können sie komplett getrennt an einer anderen Stelle montiert sein, was den Vorteil hat, dass alle Module baugleich sein können. Die signalführenden Leiterbahnen der verschiedenen Flachspulen bzw. Paare von Flachspulen werden über die Kontaktelemente zu dieser Auswerteelektronik geführt und dort zentral verarbeitet.

Ein Beispiel für die Signalauswertung soll anhand von Tabelle 1 erläutert werden. Hier sind die Flachspulenpaare (und damit Bereiche des Hubs, der gemessen wird) mit Buchstaben (A, B, C, ...) bezeichnet, die einzelnen Flachspulen eines Paars mit pc_1 bzw. pc_2. S_C_pc_1 bezeichnet also das Signal der ersten Flachspule des Spulenpaars in Hubbereich C. Die zugehörigen stabilen Differenzsignale Sig_diff werden wie oben beschrieben gebildet.

Tabelle 1 behandelt die Hubbereiche B-D, wobei B bei h = 0% beginnt und D bei h = 260% endet. "n.d." bedeutet hierbei, dass der Signalpegel für eine Auswertung zu gering ist. Für Auswertezwecke werden nun Bereiche festgelegt, in denen das Differenzsignal zur Hubmessung verwendet werden soll, z.B. indem Grenzen für den Betrag des Differenzsignals gefordert werden.

In Tabelle 1 ist dies beispielhaft für Differenzsignale, die betragsmäßig kleiner oder gleich 0,8 sind, dargestellt (hervorgehobener Bereich). Für Bereich C ergibt sich der Gesamthub aus der Summe des Offsetwerts für Bereich C (d.h. der Hub, bei dem sich Bereich C, von Hub 0 an gerechnet, befindet) plus dem gemessenen Hubwert, der sich aus der Position des Zeigers bzw. den Signalen der Flachspulen in Bereich C ergibt.

Die Auswahl des aktiv zu messenden Bereichs kann z.B. dadurch erfolgen, dass immer zunächst alle Signale abgefragt und verglichen werden. Nur die Signale, welche den höchsten Pegel besitzen oder einen Mindestpegel überschreiten, können verlässlich zur Hubmessung herangezogen werden. Um Strom zu sparen, kann jeweils nur ein für die Hubmessung relevanter Teil aller Flachspulen angesteuert werden, beispielsweise nach folgendem Verfahren:

- Zunächst werden alle Flachspulen oder Spulenpaare kurz angesteuert, um eine Aussage zu erhalten, welches Spulenpaar den höchsten Pegel besitzt (Startpunktfindung).
- Danach wird nur noch das momentan benötigte Spulenpaar und die beiden direkt benachbarten angesteuert, um einen Übergang in den jeweils nächsten Bereich mitzubekommen. Es kann auch nur das momentan benötigte Spulenpaar und das, auf welches sich der Zeiger gerade zubewegt, angesteuert werden. Welches Paar das ist, bestimmt sich aus dem Vorzeichen der zeitlichen Ableitung des Hubs.

Glossar

Differentialdrossel

Elektrisch stellt ein Messgerät nach dem Differentialdrosselprinzip eine Wheatstonesche Halbbrücke dar, die aus zwei Messspulen besteht. Ein ferromagnetischer Kern ist so justiert, dass in seiner Null- bzw. Ruhestellung beide Messspulen den gleichen Scheinwiderstand aufweisen. Die Brückenschaltung ist damit abgeglichen, die Messspannung folglich Null. Wird der Kern aus seiner Null- bzw. Ruhestellung herausbewegt, so ändern sich die Scheinwiderstände der beiden Messspulen gegensinnig und die Messspannung wächst innerhalb des Messbereiches proportional mit der Verschiebung des Kerns.

Differentialtransformator

Ein Differentialtransformator ist eine Spezialform eines Transformators. Er besteht in der Regel aus einer Primärspule und zwei Sekundärspulen. Letztere sind gegenphasig in Reihe geschaltet, dadurch subtrahieren sich die Spannungen an ihren Anschlüssen. Die resultierende Spannung ist genau dann Null, wenn die beiden Spulen und die gesamte Konstruktion symmetrisch aufgebaut sind. Wird die Symmetrie gestört, so entsteht eine Ausgangsspannung, deren Phase in Bezug zur Erregung (Primärspannung) die Richtung und deren Wert die Größe der Asymmetrie angibt. Dieses Prinzip wird häufig bei Wege- und bei Rotationsmessungen verwendet. (Nach https://de.wikipedia.org/wiki/Differentialtransformator)

Ferrit

Ferrite sind elektrisch schlecht oder nicht leitende ferrimagnetische keramische Werkstoffe aus dem Eisenoxid Hämatit ($Fe_2O_3$), seltener aus Magnetit ($Fe_3O_4$) und aus weiteren Metalloxiden oder -karbonaten. Je nach Zusammensetzung sind Ferrite hart- oder weichmagnetisch. Die chemische Zusammensetzung von Ferriten kann durch die allgemeine Formel $MeO \cdot Fe_2O_3$ beschrieben werden. Bei weichmagnetischen Ferriten kommen als weitere Metalle (Me) Nickel, Zink, Mangan, Cobalt, Kupfer, Magnesium oder Cadmium zum Einsatz, bei hartmagnetischen Ferriten Barium, Strontium oder Kobalt.
In einem Ferrit kommen auf drei Metall- ungefähr vier Sauerstoff-Atome. Die Metalle und der Sauerstoff bilden ein kubisches Kristallsystem, innerhalb dessen die Legierungsbestandteile eingelagert sind. Die Kristallsysteme wachsen zu unterschiedlich großen Körnern heran. Da die Außengrenzen der Körner aus nichtleitendem $Fe_2O_4$ bestehen, sind sie elektrisch gegeneinander isoliert. Dies ist besonders für weichmagnetische Ferrite wichtig, weil dadurch das Ferritmaterial praktisch nichtleitend ist und somit Magnetkerne mit äußerst geringen Kernverlusten herzustellen sind.
Weichmagnetische Ferrite werden in der Elektrotechnik als Magnetkerne in Transformatoren, Schaltnetzteilen, Drosseln und in Spulen eingesetzt. Im nicht gesättigten Fall ist eine hohe magnetische Leitfähigkeit (Permeabilität) möglich. Da sie kaum elektrisch leitfähig sind und daher nahezu keine Wirbelstromverluste auftreten, sind sie auch für hohe Frequenzen bis zu einigen MHz geeignet.
Hartmagnetische Ferrite werden als kostengünstige Dauermagnete beispielsweise in Lautsprechern eingesetzt.
(Nach https://de.wikipedia.org/wiki/Ferrite)

Flachspule

Bei einer Flachspule handelt es sich um eine Spule in flacher Spiralform. Der Spulenquerschnitt kann hierbei z.B. rechteckig sein. Flachspulen werden oft als spiralförmige Leiterbahn direkt auf einer Leiterplatte realisiert.

Stellventil

Stellventile, auch Prozess- oder Regelventile genannt, dienen zur Drosselung bzw. Regelung fluidischer Ströme. In einer Durchflussöffnung eines Ventilsitzes wird zu diesem Zweck ein Verschlussteil mittels einer Ventilstange und eines Antriebs bewegt. Dadurch kann die Durchflussöffnung freigegeben oder abgeschlossen werden, wodurch die Durchflussmenge verändert wird.

Zeiger

Dies bezeichnet ein in eine Richtung gegenüber den beiden dazu senkrechten Richtungen deutlich ausgedehntes Element. Typischerweise ist ein Zeiger stabförmig, er kann aber auch abgeflacht sein. Der Zeiger kann in seiner Längsrichtung an einem Ende spitz zulaufend ausgebildet sein, dies ist aber nicht zwingend. Die Bezeichnung rührt daher, dass ein solches Element dafür geeignet sein kann, etwas anzuzeigen.

**Tabelle 1**

| h [%] | Bereich B | | Bereich C | | Bereich D | | Sig_diff_B | Sig_diff_C | Sig_diff_D |
|---|---|---|---|---|---|---|---|---|---|
| | S_B_pc_2 | S_B_pc_1 | S_C-pc_2 | S_C_pc_1 | S_D_pc_2 | S_D_pc_1 | | | |
| 0 | 0 | 1 | 0 | 0 | 0 | 0 | 1 | n.d. | n.d. |
| 10 | 0,1 | 0,9 | 0 | 0 | 0 | 0 | 0,8 | n.d. | n.d. |
| 20 | 0,2 | 0,8 | 0 | 0 | 0 | 0 | 0,6 | n.d. | n.d. |
| 30 | 0,3 | 0,7 | 0 | 0 | 0 | 0 | 0,4 | n.d. | n.d. |
| 40 | 0,4 | 0,6 | 0 | 0 | 0 | 0 | 0,2 | n.d. | n.d. |
| 50 | 0,5 | 0,5 | 0 | 0 | 0 | 0 | 0 | n.d. | n.d. |
| 60 | 0,6 | 0,4 | 0 | 0 | 0 | 0 | -0,2 | n.d. | n.d. |
| 70 | 0,7 | 0,3 | 0 | 0 | 0 | 0 | -0,4 | n.d. | n.d. |
| 80 | 0,8 | 0,2 | 0 | 1 | 0 | 0 | -0,6 | 1 | n.d. |
| 90 | 0,9 | 0,1 | 0,1 | 0,9 | 0 | 0 | -0,8 | 0,8 | n.d. |
| 100 | 1 | 0 | 0,2 | 0,8 | 0 | 0 | -1 | 0,6 | n.d. |
| 110 | 0 | 0 | 0,3 | 0,7 | 0 | 0 | n.d. | 0,4 | n.d. |
| 120 | 0 | 0 | 0,4 | 0,6 | 0 | 0 | n.d. | 0,2 | n.d. |
| 130 | 0 | 0 | 0,5 | 0,5 | 0 | 0 | n.d. | 0 | n.d. |
| 140 | 0 | 0 | 0,6 | 0,4 | 0 | 0 | n.d. | -0,2 | n.d. |
| 150 | 0 | 0 | 0,7 | 0,3 | 0 | 0 | n.d. | -0,4 | n.d. |
| 160 | 0 | 0 | 0,8 | 0,2 | 0 | 1 | n.d. | -0,6 | 1 |
| 170 | 0 | 0 | 0,9 | 0,1 | 0,1 | 0,9 | n.d. | -0,8 | 0,8 |
| 180 | 0 | 0 | 1 | 0 | 0,2 | 0,8 | n.d. | -1 | 0,6 |
| 190 | 0 | 0 | 0 | 0 | 0,3 | 0,7 | n.d. | n.d. | 0,4 |
| 200 | 0 | 0 | 0 | 0 | 0,4 | 0,6 | n.d. | n.d. | 0,2 |
| 210 | 0 | 0 | 0 | 0 | 0,5 | 0,5 | n.d. | n.d. | 0 |
| 220 | 0 | 0 | 0 | 0 | 0,6 | 0,4 | n.d. | n.d. | -0,2 |
| 230 | 0 | 0 | 0 | 0 | 0,7 | 0,3 | n.d. | n.d. | -0,4 |
| 240 | 0 | 0 | 0 | 0 | 0,8 | 0,2 | n.d. | n.d. | -0,6 |
| 250 | 0 | 0 | 0 | 0 | 0,9 | 0,1 | n.d. | n.d. | -0,8 |
| 260 | 0 | 0 | 0 | 0 | 1 | 0 | n.d. | n.d. | -1 |
| 270 | 0 | 0 | 0 | 0 | 0 | 0 | n.d. | n.d. | n.d. |

Bezugszeichen

| 100 | Modul |
|-----|-------|
| 110 | Zeiger |
| 120 | Leiterplatte |
| 130 | erste Flachspule |
| 135 | zweite Flachspule |
| 140 | Anschlüsse der ersten Flachspule |
| 145 | Anschlüsse der zweiten Flachspule |
| 200 | Stellventil |
| 210 | Ventilkegel |
| 220 | pneumatischer Antrieb |
| 230 | Ventilstange |
| 240 | Zeiger |
| 250 | Modul |
| 260 | Paar von Flachspulen |
| 265 | Paar von Flachspulen |
| 270 | Paar von Flachspulen |
| 300 | Ventilstange |
| 310 | Modul |
| 320 | Paar von Flachspulen |
| 325 | Paar von Flachspulen |
| 330 | Paar von Flachspulen |
| 340 | Führungsschiene |
| 345 | Führungsschiene |
| 350 | Zeiger |
| 360 | Mitnehmerring |
| 370 | Mitnehmerstift |
| 400 | Modul |
| 410 | Zeiger |
| 420 | Ventilstange |
| 430 | Abschirm-Hülle |
| 500 | Modul |
| 510 | Zeiger |
| 520 | Ventilstange |
| 530 | Abschirm-Hülle |
| 600 | Modul |
| 605 | Modul |
| 610 | Positioniervorsehung bzw. Positionierloch |
| 620 | Zentrierung bzw. Indexstift |
| 630 | Gehäuse |
| 700 | Modul |
| 705 | Modul |
| 710 | Positioniervorsehung bzw. Positionierloch |
| 740 | Kontaktelemente |

zitierte Literatur

zitierte Patentliteratur

DE 100 48 435 A1
EP 861 417 B1
EP 1 083 408 B1
EP 1 158 266 A1

EP 2 834 601 B1
EP 3 365 634 B1

**Patentansprüche**

1. Ventilstange mit Positionssensor zum Bestimmen der Position der Ventilstange (230; 300; 420; 520) eines Stellventils (200),

   1.1 mit einem Zeiger (110; 240; 350; 410; 510), der derart mit der Ventilstange gekoppelt ist, dass er bei einer Bewegung der Ventilstange von dieser mitgeführt wird;
   1.1.1 wobei der Zeiger aus einem magnetisch und / oder elektrisch leitenden Material gebildet ist und / oder mindestens ein passives elektronisches Bauelement trägt;
   1.2 mit einer Mehrzahl von Modulen (100; 250; 310; 400; 500; 600, 605; 700, 705);
   1.2.1 wobei jedes Modul aus einer Leiterplatte (120) gebildet ist, auf der mindestens eine Flachspule (130, 135) aufgedruckt ist;
   1.2.2 wobei jedes Modul derart angeordnet ist, dass der Zeiger bei einer Bewegung der Ventilstange die mindestens eine Flachspule berührungslos überstreicht;
   1.2.3 wobei die Form und die Abmessungen aller Module identisch sind;
   1.2.4 wobei jedes Modul identische Flachspulen (130, 135) aufweist; und
   1.2.5 wobei die Module derart ausgebildet sind, dass sie äquidistant und linear miteinander verbindbar sind;
   1.3 wobei die Leiterplatten (120) der Module (600, 605; 700, 705)
   1.3.1 die Form zweier identischer Rechtecke haben,
   1.3.2 die in Längsrichtung des jeweiligen Moduls parallel angeordnet sind
   1.3.3 und sich berühren,
   1.3.4 jedoch in Längsrichtung des Moduls gegeneinander verschoben sind,
   1.3.5 sodass ein Versatz der Rechtecke gegeneinander vorhanden ist; und
   1.3.6 wobei die Flachspulen derart auf den Leiterplatten aufgedruckt sind, dass sich bei jeweils zwei verbundenen Modulen ein Überlapp der Flachspulen auf den beiden Modulen in Längsrichtung der Ventilstange ergibt;
   1.4 wobei die Leiterplatten der Module (600, 605; 700, 705) Positioniervorsehungen (610; 710) aufweisen;
   1.5 wobei eine Mehrzahl von Modulen (100; 250; 310; 400; 500; 600, 605; 700, 705) in einem Gehäuse angeordnet ist;
   1.5.1 wobei das Gehäuse einen Schlitz aufweist, durch den der Zeiger in das Gehäuse hineinragen kann, um die mindestens eine Flachspule (130, 135) zu überstreichen;
   1.5.2 und wobei das Gehäuse Zentrierungen (620) aufweist, welche komplementär in die Positioniervorsehungen (610; 710) der Leiterplatten der Module eingreifen, um die Module äquidistant zueinander auszurichten; und
   1.6 mit einem Messwandler;
   1.6.1 wobei der Messwandler an der mindestens einen Flachspule ein Signal misst, welches Rückschlüsse über die Relativposition des Zeigers und der mindestens einen Flachspule erlaubt.

2. Ventilstange mit Positionssensor nach dem vorhergehenden Anspruch,
   **gekennzeichnet durch**

   2.1 eine Mehrzahl von Flachspulen (130, 135);
   2.2 wobei die Flachspulen derart paarweise angeordnet sind, dass die Flachspulen eines Paares (260, 265, 270; 320, 325, 330) jeweils gegenläufige Signale liefern;
   2.3 wobei die Flachspulen (130, 135) jeweils eine dreieckige Form haben; und
   2.4 wobei die zwei Flachspulen eines Paars (260, 265, 270; 320, 325, 330) punktsymmetrisch zueinander angeordnet sind.

3. Ventilstange mit Positionssensor nach einem der vorhergehenden Ansprüche,
   **dadurch gekennzeichnet,**
   **dass** alle Flachspulen (130, 135) oder bei paarweiser Anordnung alle Paare (260, 265, 270; 320, 325, 330) von Flachspulen derart angeordnet sind, dass sie sich in Längsrichtung der Ventilstange (230; 300; 420; 520) jeweils gleich weit überlappen.

4. Ventilstange mit Positionssensor nach einem der vorhergehenden Ansprüche,

**dadurch gekennzeichnet,**
**dass** die elektrische Verbindung der Module durch Federkontakte (740) erfolgt.

5. Ventilstange mit Positionssensor nach einem der vorhergehenden Ansprüche,
**dadurch gekennzeichnet,**
**dass** der Zeiger (110; 240; 350; 410; 510) aus Aluminium, Blech, Ferrit oder Messing besteht.

6. Ventilstange mit Positionssensor nach einem der vorhergehenden Ansprüche,
**dadurch gekennzeichnet,**

**dass** mindestens eine Schiene (340, 345) und/oder ein Schlitten vorhanden sind;
wobei der Zeiger (110; 240; 350; 410; 510) mittels der Schiene und/oder des Schlittens parallel zur Ventilstange (230; 300; 420; 520) entlang der Module (300) geführt wird.

7. Ventilstange mit Positionssensor nach dem vorhergehenden Anspruch,
**dadurch gekennzeichnet,**
**dass** die mindestens eine Schiene (340, 345) sich an den Modulen (300) befindet.

8. Ventilstange mit Positionssensor nach einem der beiden vorhergehenden Ansprüche 6 oder 7,
**dadurch gekennzeichnet,**

8.1 dass die Kopplung des Zeigers (110; 240; 350; 410; 510) an die Ventilstange (230; 300; 420; 520) durch einen Mitnehmerring (360) an der Ventilstange erfolgt,
8.2 wobei ein am Zeiger befestigter Stift (370) derart in einem Langloch oder einer Rille im Mitnehmerring läuft,
8.2.1 dass der Zeiger vertikalen Bewegungen der Ventilstange folgt,
8.2.2 aber von Drehbewegungen der Ventilstange entkoppelt ist.

9. Ventilstange mit Positionssensor nach einem der vorhergehenden Ansprüche,
**dadurch gekennzeichnet,**

9.1 dass der Zeiger (110; 240; 350; 410; 510) eine Abschirm-Hülle (430; 530) aufweist,
9.2 wobei die Abschirm-Hülle aus einem elektrisch und / oder magnetisch leitenden Material besteht und / oder geerdet ist, und
9.3 wobei die Abschirm-Hülle den Zeiger und das mindestens eine Modul (100; 250; 310; 400; 500; 600, 605; 700, 705) in einer Umgebung des Zeigers umschließt.

10. Ventilstange mit Positionssensor nach einem der vorhergehenden Ansprüche,
**dadurch gekennzeichnet,**
**dass** der Messwandler durch eine Mehrzahl von parallelen Leitungen derart mit jeder Flachspule (130, 135) oder bei paarweiser Anordnung jedem Paar (260, 265, 270; 320, 325, 330) von Flachspulen verbunden ist, dass er das Signal jeweils unabhängig von den übrigen Flachspulen messen kann.

11. Ventilstange mit Positionssensor nach einem der Ansprüche 1 bis 9,
**dadurch gekennzeichnet,**

11.1 dass der Messwandler durch einen Datenbus mit jeder Flachspule (130, 135) oder bei paarweiser Anordnung jedem Paar (260, 265, 270; 320, 325, 330) von Flachspulen verbunden ist; wobei
11.2 an jeder Flachspule oder bei paarweiser Anordnung jedem Paar von Flachspulen auf der jeweiligen Leiterplatte ein Chip mit einer eigenen digitalen Identfikation vorhanden ist, so dass der Messwandler das Signal jeweils unabhängig von den übrigen Flachspulen messen kann.

12. Ventilstange mit Positionssensor nach einem der vorhergehenden Ansprüche,
**dadurch gekennzeichnet,**

**dass** das Messverfahren ausgewählt ist aus: Differentialdrossel, Differentialtransformator, Induktivitätsmessung der Spulen, Dämpfung durch Wirbelströme; und
**dass** der Messwandler durch einen Mikrocontroller verwirklicht ist.

**13.** Ventilstange mit Positionssensor nach einem der vorhergehenden Ansprüche,
**dadurch gekennzeichnet,**
**dass** der Messwandler derart konfiguriert ist, dass nach einer Initialisierungsphase nur die Flachspule (130, 135) oder das Paar (260, 265, 270; 320, 325, 330) von Flachspulen mit dem stärksten Signal und die unmittelbaren Nachbarn davon angesteuert werden.

**14.** Stellventil (200) mit einer Ventilstange mit einem Positionssensor nach einem der vorhergehenden Ansprüche.

**15.** Prozesstechnische Anlage mit einem Stellventil (200) nach dem vorhergehenden Anspruch.


**Claims**

**1.** Valve stem comprising position sensor for determining the position of the valve stem (230; 300; 420; 520) of a control valve (200),

1.1 having a pointer (110; 240; 350; 410; 510) which is coupled to the valve stem in such a way that it is carried along by the valve stem when it moves;
1.1.1 wherein the pointer is made of a magnetically and/or electrically conductive material and/or carries at least one passive electronic component;
1.2 having a plurality of modules (100; 250; 310; 400; 500; 600, 605; 700, 705);
1.2.1 wherein each module is formed from a printed circuit board (120) on which at least one flat coil (130, 135) is printed;
1.2.2 wherein each module is arranged in such a way that the pointer sweeps over the at least one flat coil without contact when the valve stem moves;
1.2.3 wherein the shape and dimensions of all modules are identical;
1.2.4 wherein each module has identical flat coils (130, 135); and
1.2.5 wherein the modules are designed in such a way that they can be connected to each other equidistantly and linearly;
1.3 wherein the printed circuit boards (120) of the modules (600, 605; 700, 705)
1.3.1 have the shape of two identical rectangles,
1.3.2 which are arranged parallel in the longitudinal direction of the particular module
1.3.3 and touch each other
1.3.4 however, they are shifted relative to each other in the longitudinal direction of the module,
1.3.5 so that there is an offset between the rectangles; and
1.3.6 wherein the flat coils are printed on the printed circuit boards in such a way that, in the case of two connected modules, there is an overlap of the flat coils on the two modules in the longitudinal direction of the valve stem;
1.4 wherein the printed circuit boards of the modules (600, 605; 700, 705) have positioning provisions (610; 710);
1.5 wherein a plurality of modules (100; 250; 310; 400; 500; 600, 605; 700, 705) are arranged in a housing;
1.5.1 wherein the housing has a slot through which the pointer can protrude into the housing to sweep over the at least one flat coil (130, 135);
1.5.2 and wherein the housing has centering features (620) which engage complementarily with the positioning provisions (610; 710) of the printed circuit boards of the modules in order to align the modules equidistantly to each other; and
1.6 having a measuring transducer;
1.6.1 wherein the measuring transducer measures a signal at the at least one flat coil which allows conclusions to be drawn about the relative position of the pointer and the at least one flat coil.

**2.** Valve stem comprising position sensor according to the preceding claim,
**characterized by**

2.1 a plurality of flat coils (130, 135);
2.2 the flat coils being arranged in pairs in such a way that the flat coils of a pair (260, 265, 270; 320, 325, 330) each deliver opposing signals;
2.3 the flat coils (130, 135) each having a triangular shape; and
2.4 the two flat coils of a pair (260, 265, 270; 320, 325, 330) being arranged point-symmetrically to each other.

**3.** Valve stem comprising position sensor according to either of the preceding claims,

**characterized**

**in that** all flat coils (130, 135) or, in the case of paired arrangements, all pairs (260, 265, 270; 320, 325, 330) of flat coils are arranged in such a way that they overlap by the same amount in the longitudinal direction of the valve stem (230; 300; 420; 520).

4. Valve stem comprising position sensor according to any of the preceding claims,
**characterized**
**in that** the electrical connection of the modules is made by spring contacts (740).

5. Valve stem comprising position sensor according to any of the preceding claims,
**characterized**
**in that** the pointer (110; 240; 350; 410; 510) is made of aluminum, sheet metal, ferrite or brass.

6. Valve stem comprising position sensor according to any of the preceding claims,
**characterized**

   **in that** at least one rail (340, 345) and/or one sliding carriage are present;
   the pointer (110; 240; 350; 410; 510) being guided along the modules (300) by means of the rail and/or the sliding carriage parallel to the valve stem (230; 300; 420; 520).

7. Valve stem comprising position sensor according to the preceding claim,
**characterized**
**in that** the at least one rail (340, 345) is located on the modules (300).

8. Valve stem comprising position sensor according to one of the two preceding claims 6 or 7,
**characterized**

   8.1 **in that** the coupling of the pointer (110; 240; 350; 410; 510) to the valve stem (230; 300; 420; 520) is effected by a drive ring (360) on the valve stem,
   8.2 a pin (370) attached to the pointer running in such a way in an elongated hole or groove in the drive ring,
   8.2.1 that the pointer follows vertical movements of the valve stem,
   8.2.2 but is decoupled from rotational movements of the valve stem.

9. Valve stem comprising position sensor according to any of the preceding claims,
**characterized**

   9.1 **in that** the pointer (110; 240; 350; 410; 510) has a shielding cover (430; 530),
   9.2 the shielding cover consisting of an electrically and/or magnetically conductive material and/or being grounded, and
   9.3 the shielding cover enclosing the pointer and the at least one module (100; 250; 310; 400; 500; 600, 605; 700, 705) in a vicinity of the pointer.

10. Valve stem comprising position sensor according to any of the preceding claims,
**characterized**
**in that** the measuring transducer is connected to each flat coil (130, 135) or, in the case of paired arrangements, to each pair (260, 265, 270; 320, 325, 330) of flat coils by a plurality of parallel lines in such a way that it can measure the signal independently of the other flat coils.

11. Valve stem comprising position sensor according to any of claims 1 to 9,
**characterized**

   11.1 **in that** the measuring transducer is connected by a data bus to each flat coil (130, 135) or, in the case of paired arrangements, to each pair (260, 265, 270; 320, 325, 330) of flat coils;
   11.2 each flat coil, or in the case of paired arrangements, each pair of flat coils on the particular circuit board having a chip with its own digital identification, so that the measuring transducer can measure the signal independently of the other flat coils.

12. Valve stem comprising position sensor according to any of the preceding claims,

**characterized**

> **in that** the measurement method selected is from: differential choke, differential transformer, inductance measurement of the coils, damping by eddy currents; and
> **in that** the measuring transducer is implemented by a microcontroller.

13. Valve stem comprising position sensor according to any of the preceding claims,
    **characterized**
    **in that** the measuring transducer is configured in such a way that, after an initialization phase, only the flat coil (130, 135) or the pair (260, 265, 270; 320, 325, 330) of flat coils with the strongest signal and their immediate neighbors are driven.

14. Control valve (200) comprising a valve stem having a position sensor according to any of the preceding claims.

15. Process engineering system comprising a control valve (200) according to the preceding claim.

**Revendications**

1. Tige de soupape comportant un capteur de position pour la détermination de la position de la tige de soupape (230 ; 300 ; 420 ; 520) d'une soupape de réglage (200),

   1.1 comportant un pointeur (110 ; 240 ; 350 ; 410 ; 510) qui est accouplé à la tige de soupape de telle sorte qu'il est entraîné par celle-ci lors d'un mouvement de la tige de soupape ;
   1.1.1 dans laquelle le pointeur est formé à partir d'un matériau magnétiquement et/ou électriquement conducteur et/ou porte au moins un composant électronique passif ;
   1.2 comportant une pluralité de modules (100 ; 250 ; 310 ; 400 ; 500 ; 600, 605 ; 700, 705) ;
   1.2.1 dans laquelle chaque module est formé à partir d'une carte de circuits imprimés (120) sur laquelle est imprimée au moins une bobine plate (130, 135) ;
   1.2.2 dans laquelle chaque module est disposé de telle sorte que le pointeur recouvre sans contact l'au moins une bobine plate lors d'un mouvement de la tige de soupape ;
   1.2.3 dans laquelle la forme et les dimensions de tous les modules sont identiques ;
   1.2.4 dans laquelle chaque module présente des bobines plates (130, 135) identiques ; et
   1.2.5 dans laquelle les modules sont conçus de telle sorte qu'ils peuvent être reliés entre eux de manière équidistante et linéaire ;
   1.3 dans laquelle les cartes de circuits imprimés (120) des modules (600, 605 ; 700, 705)
   1.3.1 ont la forme de deux rectangles identiques,
   1.3.2 sont disposées parallèlement dans le sens de la longueur du module respectif,
   1.3.3 et se touchent,
   1.3.4 mais sont décalées les unes par rapport aux autres dans le sens de la longueur du module,
   1.3.5 de sorte qu'un décalage des rectangles les uns par rapport aux autres est prévu ; et
   1.3.6 dans laquelle les bobines plates sont imprimées sur les cartes de circuits imprimés de telle sorte que, pour respectivement deux modules reliés, il en résulte un chevauchement des bobines plates sur les deux modules dans le sens de la longueur de la tige de soupape ;
   1.4 dans laquelle les cartes de circuits imprimés des modules (600, 605 ; 700, 705) présentent des moyens de positionnement (610 ; 710) ;
   1.5 dans laquelle une pluralité de modules (100 ; 250 ; 310 ; 400 ; 500 ; 600, 605 ; 700, 705) sont disposés dans un boîtier ;
   1.5.1 dans laquelle le boîtier présente une fente à travers laquelle le pointeur peut faire saillie dans le boîtier pour recouvrir l'au moins une bobine plate (130, 135) ;
   1.5.2 et dans laquelle le boîtier présente des moyens de centrage (620) qui viennent en prise de manière complémentaire dans les moyens de positionnement (610 ; 710) des cartes de circuits imprimés des modules afin d'aligner les modules de manière équidistante les uns par rapport aux autres ; et 1.6 comportant un transducteur ;
   1.6.1 dans laquelle le transducteur mesure sur l'au moins une bobine plate un signal qui permet de tirer des conclusions sur la position relative du pointeur et de l'au moins une bobine plate.

2. Tige de soupape comportant un capteur de position selon la revendication précédente,
   **caractérisée par**

2.1 une pluralité de bobines plates (130, 135) ;

2.2 dans laquelle les bobines plates sont disposées par paires de telle sorte que les bobines plates d'une paire (260, 265, 270 ; 320, 325, 330) fournissent respectivement des signaux de sens contraire ;

2.3 dans laquelle les bobines plates (130, 135) ont respectivement une forme triangulaire ; et

2.4 dans laquelle les deux bobines plates d'une paire (260, 265, 270 ; 320, 325, 330) sont disposées avec une symétrie ponctuelle l'une par rapport à l'autre.

3. Tige de soupape comportant un capteur de position selon l'une des revendications précédentes, **caractérisée en ce que**
toutes les bobines plates (130, 135) ou, dans le cas d'une disposition par paires, toutes les paires (260, 265, 270 ; 320, 325, 330) de bobines plates sont disposées de telle sorte qu'elles se chevauchent respectivement de la même distance dans le sens de la longueur de la tige de soupape (230 ; 300 ; 420 ; 520).

4. Tige de soupape comportant un capteur de position selon l'une des revendications précédentes, **caractérisée en ce que**
la connexion électrique des modules est effectuée par des contacts à ressort (740).

5. Tige de soupape comportant un capteur de position selon l'une des revendications précédentes, **caractérisée en ce que**
le pointeur (110 ; 240 ; 350 ; 410 ; 510) est en aluminium, en tôle, en ferrite ou en laiton.

6. Tige de soupape comportant un capteur de position selon l'une des revendications précédentes, **caractérisée en ce que**

sont prévus au moins un rail (340, 345) et/ou un chariot ;

dans laquelle le pointeur (110 ; 240 ; 350 ; 410 ; 510) est guidé parallèlement à la tige de soupape (230 ; 300 ; 420 ; 520) le long des modules (300) au moyen du rail et/ou du chariot.

7. Tige de soupape comportant un capteur de position selon la revendication précédente, **caractérisée en ce que**
l'au moins un rail (340, 345) se trouve sur les modules (300).

8. Tige de soupape comportant un capteur de position selon l'une des deux revendications 6 ou 7 précédentes, **caractérisée en ce**

8.1 **que l'**accouplement du pointeur (110 ; 240 ; 350 ; 410 ; 510) à la tige de soupape (230 ; 300 ; 420 ; 520) est effectuée au moyen d'une bague d'entraînement (360) sur la tige de soupape,

8.2 dans laquelle une broche (370) fixée au pointeur se déplace dans un trou oblong ou une rainure dans la bague d'entraînement de telle sorte

8.2.1 que le pointeur suit des mouvements verticaux de la tige de soupape,

8.2.2 mais est désolidarisé de mouvements de rotation de la tige de soupape.

9. Tige de soupape comportant un capteur de position selon l'une des revendications précédentes, **caractérisée en ce**

9.1 **que** le pointeur (110 ; 240 ; 350 ; 410 ; 510) présente une enveloppe de protection (430 ; 530),

9.2 dans laquelle l'enveloppe de protection est constituée d'un matériau électriquement et/ou magnétiquement conducteur et/ou est mise à la terre, et

9.3 dans laquelle l'enveloppe de protection entoure le pointeur et l'au moins un module (100 ; 250 ; 310 ; 400 ; 500 ; 600, 605 ; 700, 705) dans un voisinage du pointeur.

10. Tige de soupape comportant un capteur de position selon l'une des revendications précédentes, **caractérisée en ce que**
le transducteur est connecté par une pluralité de lignes parallèles à chaque bobine plate (130, 135) ou, dans le cas d'une disposition par paires, à chaque paire (260, 265, 270 ; 320, 325, 330) de bobines plates, de telle sorte qu'il peut mesurer le signal respectivement indépendamment des autres bobines plates.

11. Tige de soupape comportant un capteur de position selon l'une des revendications 1 à 9,

**caractérisée en ce**

11.1 **que** le transducteur est connecté par un bus de données à chaque bobine plate (130, 135) ou, dans le cas d'une disposition par paires, à chaque paire (260, 265, 270 ; 320, 325, 330) de bobines plates ; dans laquelle 11.2 une puce comportant une identification numérique propre est présente sur chaque bobine plate ou, dans le cas d'une disposition par paires, sur chaque paire de bobines plates de la carte de circuits imprimés respective, de sorte que le transducteur peut mesurer le signal respectivement indépendamment des autres bobines plates.

**12.** Tige de soupape comportant un capteur de position selon l'une des revendications précédentes, **caractérisée en ce que**

le procédé de mesure est choisi parmi : inductance d'arrêt différentielle, transformateur différentiel, mesure de l'inductance des bobines, amortissement par courants de Foucault ; et que le transducteur est formé par un microcontrôleur.

**13.** Tige de soupape comportant un capteur de position selon l'une des revendications précédentes, **caractérisée en ce que** le transducteur est configuré de telle sorte qu'après une phase d'initialisation, seule la bobine plate (130, 135) ou la paire (260, 265, 270 ; 320, 325, 330) de bobines plates avec le signal le plus fort et les voisines immédiates de celle-ci sont activées.

**14.** Soupape de réglage (200) comportant une tige de soupape comportant un capteur de position selon l'une des revendications précédentes.

**15.** Installation suivant la technique des processus comportant une soupape de réglage (200) selon la revendication précédente.

Fig. 1

Fig. 2

Fig. 3

Fig. 4

Fig. 5

Fig. 6

700

705

740

710

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2834601 B1
- EP 861417 B1
- DE 10048435 A1

- EP 1083408 B1
- EP 3365634 B1
- EP 1158266 A1